# FASCICULE DE BREVET EUROPEEN

(11) **EP 0 705 868 B1**
(45) Date de publication et mention de la délivrance du brevet: **08.12.1999**
(21) Numéro de dépôt: 95402143.2
(22) Date de dépôt: 25.09.1995
(51) Int. Cl.: C08J 9/40, C08L 1/24, A47L 13/16

(54) **Matériaux à base de cellulose régénérée présentant une résistance élevée à l'eau de Javel et procédé pour leur préparation**
Materialien auf regenerierter Zellulosebasis mit hohem Bleichlaugewiderstand und Herstellungsverfahren
Regenerated cellulose-based materials having a high bleach resistance, and process for preparing them

(30) Priorité: 26.09.1994 FR 9411429
(43) Date de publication de la demande: 10.04.1996
(73) Titulaire: FINANCIERE ELYSEES BALZAC, F-75008 Paris (FR)
(72) Inventeur: Chalvin, Christophe, F-60000 Beauvais (FR); Ducommun, Jérôme, F-60300 Aumont en Halatte (FR); Wertz, Jean-Luc, F-60000 Beauvais (FR)
(74) Mandataire: Le Roux, Martine

(56) Documents cités:
- WO-A-87/03313
- US-A- 5 002 984

## Description

La présente invention a pour principaux objets des matériaux à base de cellulose régénérée qui présentent une résistance améliorée à l'eau de Javel, ainsi qu'un procédé pour la préparation desdits matériaux.

De tels matériaux - matériaux artificiels à base de cellulose - consistent notamment en des matériaux alvéolaires cellulosiques du type éponge, toile-éponge ou analogue ou en des fibres, fils, feuilles, textiles ou nontissés. En tant que tels ou après mise en forme, ils peuvent notamment être destinés à des travaux de nettoyage et d'entretien ménager ou à l'hygiène corporelle. Dans de tels contextes, ils peuvent être mis en contact avec de l'eau de Javel, plus ou moins diluée. Tout utilisateur, a noté, à la suite d'un tel contact, la dégradation de leur structure.

On propose présentement une solution à ce problème technique de la dégradation des matériaux à base de cellulose régénérée, dégradation due à l'action de l'eau de Javel.

L'analyse de l'art antérieur menée par la Demanderesse a montré qu'à ce jour ce problème technique spécifique n'avait pas été abordé. On ne préconise, selon ledit art antérieur, aucune méthode de protection desdits matériaux cellulosiques à l'agressivité, à leur encontre, de l'eau de Javel.

On a, dans un contexte différent, celui du blanchiment de la pâte à papier, proposé un perfectionnement aux procédés selon lesquels on fait intervenir ClO₂ à titre d'agent de blanchiment. Ledit perfectionnement, décrit dans la demande de brevet WO-A-87 03313, consiste à utiliser HClO en remplacement total ou partiel de ClO₂ ou, plus précisément, à utiliser HClO en présence d'au moins un additif choisi parmi :
- ClO₂ ;
- un composé dont la formule renferme un atome d'azote ;
- leurs mélanges.

Le(s)dit(s) additif(s) intervien(nen)t positivement d'une part au niveau de la brillance des fibres et d'autre part pour éviter leur dégradation.

Dans ce contexte, les composés, dont la formule renferme un atome d'azote, interviennent pour la protection d'un substrat (pâte à papier, à base de cellulose) vis-à-vis d'un principal agresseur (HClO) dans des conditions physico-chimiques particulières (pH=3,5 ± 0,5 ; θ ≈ 35-70°C, de préférence 45-55°C; milieu liquide visqueux au sein duquel on trouve, généralement, en solution, ledit agresseur et lesdits additifs).

L'intervention de certains desdits composés s'est révélée intéressante dans le contexte de l'invention ; contexte dans lequel lesdits composés interviennent pour la protection d'un substrat (cellulose régénérée) vis-à-vis d'un principal agresseur (ClO⁻) dans des conditions physico-chimiques particulières différentes pH neutre ou basique ; large gamme de températures, incluant des températures inférieures à l'ambiante ; réaction à l'interface liquide (solution d'eau de Javel)/solide (agent protecteur fixé dans le réseau de cellulose); lesdits composés étant fixés et/ou piégés dans le réseau de cellulose.

L'enseignement de la demande WO-A-87 03313 ne suggérait pas une telle intervention et, en tout état de cause, n'en laissait pas du tout prévoir le résultat. Il n'était nullement évident que certains desdits composés se révèleraient actifs, une fois fixés et/ou piégés et ce, dans un environnement différent.

Par ailleurs, dans des contextes également différents de celui de l'invention, on utilise des produits (molécules ou polymères) responsables d'une certaine réticulation de la cellulose. On utilise notamment :
- des molécules, dans les industries textiles, pour conférer aux substrats cellulosiques un caractère infroissable;
- des polymères réticulables, dans les industries papetières, pour améliorer la résistance des papiers à l'état humide.

L'intervention de certains desdits produits s'est révèlée intéressante dans le contexte de l'invention présentement revendiquée. La Demanderesse a toutefois mis en évidence le fait que la réticulation per se de la cellulose n'expliquait pas sa meilleure résistance à l'eau de Javel. En effet, elle a notamment observé que des éponges, traitées au glyoxal dans les conditions du procédé de l'invention (développé ci-après), ne présentent que des propriétés mécaniques très légérement supérieures (résistance à la rupture améliorée de par la réticulation de la cellulose) mais pas une meilleure résistance à l'eau de Javel.

Le problème technique abordé selon la présente invention est donc un problème complexe.

La Demanderesse, à l'issue de nombreux travaux, visant notamment à approcher les mécanismes mis en jeu, est maintenant capable de proposer des matériaux à base de cellulose régénérée qui renferment une quantité efficace d'au moins un agent chimique leur conférant une résistance améliorée à l'eau de Javel; ledit agent chimique comportant dans sa structure au moins un atome d'azote en α d'un atome de carbone et étant fixé par au moins une liaison covalente au réseau de cellulose et/ou piégé au sein dudit réseau. Avantageusement, ledit agent chimique comporte dans sa structure au moins un motif du type 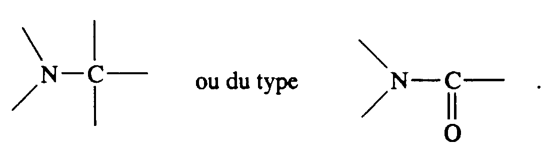 On notera incidemment ici que ledit agent chimique peut comporter dans sa structure des atomes d'azote quaternisés.

De tels matériaux cellulosiques constituent le premier objet de la présente invention dans la mesure où ils sont nouveaux. Sont en effet exclus du cadre de la présente invention :
- les textiles ennoblis avec de tels agents chimiques choisis parmi la diméthyloldihydroxyéthylèneurée (DMDHEU), la diméthyldihydroxyéthylèneurée (DMeDHEU) et leurs dérivés; les textiles renfermant de tels agents, du type copolyacrylate à fonctions N-méthylol, à titre d'agents d'enduction et/ou d'imprégnation; des nontissés renfermant de tels agents, du type copolyacrylate à fonctions N-méthylol, à titre de liants;
- les éponges et articles fibreux renfermant de tels agents, biocides, au sein de complexes métalliques. De tels éponges et articles fibreux ont été décrits dans la demande de brevet WO-A- 94 12034;
- les éponges renfermant de tels agents, du type polyamide, à titre d'agents complexants d'ions métalliques. De telles éponges ont été décrites dans le brevet US-A-5,002,984.

Les matériaux de l'invention peuvent consister, comme indiqué ci-dessus, en des matériaux alvéolaires cellulosiques du type éponge, toile-éponge c'est-à-dire en des éponges, des toiles-éponges, des éponges moussées ... matériaux utilisables en eux-mêmes ou intégrés dans la structure d'un combiné. L'expression toile-éponge désigne dans la présente demande un matériau alvéolaire cellulosique qui comporte deux faces sensiblement parallèles et une faible épaisseur. De façon nullement limitative, on peut indiquer ici que ladite épaisseur n'excède généralement pas 8 mm et est souvent comprise entre 4 et 6 mm.

Le substrat de base de tels matériaux alvéolaires cellulosiques est de l'éponge artificielle telle qu'obtenue par le procédé, dit procédé viscose, notamment décrit dans le brevet FR-A-812 502. Ce procédé comprend :
- la préparation d'une masse pâteuse à partir notamment
   1) d'une solution cellulosique telle que de la viscose (ladite viscose étant obtenue par action d'une solution alcaline sur la pâte cellulosique de base; action qui transforme ladite pâte cellulosique en alcali-cellulose, laquelle réagit avec du sulfure de carbone, pour former un xanthogénate de cellulose, lequel est soluble dans l'eau sodée),
   2) de matières fibreuses, comme le coton, le sisal et le lin, destinées à augmenter la résistance mécanique du produit fini,
   3) de pigments, destinés à imposer la couleur dudit produit fini,
   4) d'agents porophores, comme le sel de Glauber (sulfate de soude décahydraté), matières cristallines solubles et/ou fusibles destinées à former des pores après coagulation de ladite masse pâteuse par lessivage et/ou fusion;
- la mise en forme de cette masse par notamment, moulage ou enduction de part et d'autre ou d'un seul côté d'au moins une grille ou dépôt sur une bande porteuse ;
- le chauffage de celle-ci, éventuellement dans un milieu adéquat, pour que s'exerce l'action desdits agents porophores et que soit régénérée la cellulose. Ce chauffage peut être mis en oeuvre soit en faisant passer un courant électrique alternatif entre des électrodes en contact avec la pâte, soit en mettant ladite pâte en contact avec un milieu acide (pH inférieur à 1), à des températures voisines de 70°C, pendant quelques minutes (régénération dite acide, qui fait avantageusement intervenir un mélange d'acide sulfurique et de sulfate de sodium, pour la fabrication de toiles-éponges), soit en mettant ladite pâte en contact avec un milieu basique (pH voisin de 12), à des températures voisines de 100°C, pendant quelques heures (régénération dite basique, qui fait avantageusement intervenir une solution basique de sulfate de sodium, pour la fabrication d'éponges).

Les produits ainsi obtenus - matériaux alvéolaires cellulosiques - sont ensuite, selon le procédé classique, rincés, éventuellement blanchis, séchés, plastifiés avant d'être découpés et emballés.

De tels produits (éponges, toiles-éponges ...) peuvent donc constituer le substrat de base de matériaux de l'invention, matériaux à base de cellulose régénérée. En fait, leur structure est constituée d'un mélange de cellulose régénérée et de cellulose native, apportée, après l'étape de xanthation de la pâte de bois, par les matières fibreuses.

D'une manière générale, on peut préciser ici que par cellulose régénérée, l'homme de l'art entend de la cellulose qui a subi un traitement de dissolution directe (dans un solvant de la cellulose, tel l'oxyde de N-méthylmorpholine) ou indirecte (par transformation, en un dérivé soluble, tel le xanthate ou le nitrate de cellulose). A ce jour, on ne maîtrise, pour la fabrication des matériaux alvéolaires cellulosiques, que le procédé décrit ci-dessus (procédé viscose), procédé selon lequel le substrat de base est indirectement dissous (transformation en xanthate de cellulose).

Outre lesdits matériaux alvéolaires cellulosiques décrits en détail ci-dessus, la présente invention concerne également d'autres matériaux à base de cellulose régénérée qui notamment peuvent se présenter sous la forme de fibres, fils, feuilles, textiles ou nontissés. On citera, de façon nullement limitative :
- les fibres de cellulose (obtenues notamment par filage à chaud de solutions de cellulose dans l'oxyde de N-méthylmorpholine);
- les fibres de viscose (obtenues par filage d'une solution sodique de xanthate de cellulose, après mûrissement; ledit filage étant mis en oeuvre dans un bain de reprécipitation refermant du sulfate de sodium, du sulfate de zinc et de l'acide sulfurique. Le procédé de préparation de ces fibres est également appelé procédé viscose);
- les fils obtenus à partir de fibres de viscose, seules ou en mélange avec d'autres fibres (lesdits fils sont, d'une manière générale, obtenus par cardage de fibres, assemblages en rubans, retordage ...);
- les fils de viscose ou autres;
- les feuilles de Cellophane ®;
- les textiles ou tissus obtenus à partir des fils ci-dessus, seuls ou en mélange, avec des fils synthétiques par exemple;
- les nontissés obtenus à partir des fibres ci-dessus, seules ou en mélange, avec des fibres synthétiques par exemple. Lesdites fibres sont assemblées mécaniquement, chimiquement ou thermiquement pour constituer lesdits nontissés. On peut également assembler des voiles réalisés à partir desdites fibres.

Les matériaux à base de cellulose régénérée selon l'invention peuvent donc exister sous différentes formes. Ils peuvent, en tout état de cause, renfermer 100% de cellulose régénérée ou un mélange de cellulose régénérée et d'au moins un autre type de matériau (par exemple : de la cellulose native, des fils ou fibres synthétiques ...).

On précise ici que selon l'invention les matériaux à base de cellulose régénérée renferment au moins 20% en poids de cellulose régénérée. Généralement, ils en renferment de 50 à 100% en poids.

De façon caractéristique, lesdits matériaux de l'invention renferment, dans leur réseau de cellulose, une quantité efficace d'au moins un agent chimique, qui leur confère une résistance améliorée à l'eau de Javel. Ledit agent chimique dont la structure renferme au moins un atome d'azote en α d'un atome de carbone (et avantageusement au moins un motif du type 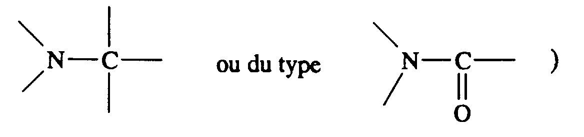 est renfermé, dans ledit réseau, de façon stable, pour assurer une protection durable dudit réseau. Il est avantageusement fixé audit réseau par au moins une liaison covalente. Toutefois, l'existence d'une telle liaison ne parait nullement obligatoire dans la mesure où la Demanderesse a notamment pu constater l'action bénéfique, durable, d'agents, notamment du type polymère, introduits dans le réseau de cellulose, sans mettre en évidence, de façon certaine, de liaison(s) covalente(s) entre lesdits agents et ledit réseau. De tels agents ne seraient que piégés, notamment mécaniquement, dans ledit réseau.

Par ailleurs, on prévoit, selon une variante de l'invention, l'intervention de produit tiers pour la fixation desdits agents au sein des matériaux cellulosiques et notamment l'intervention de polymères type latex ou résine ou celle d'agents chélateurs. De tels produits tiers peuvent en eux-même être des agents chimiques exerçant une action bénéfique vis-à-vis de l'eau de Javel.

Les agents chimiques, qui interviennent dans la structure des matériaux cellulosiques de l'invention et y exercent de façon durable leur action bénéfique, y sont donc fixés par au moins une liaison covalente et/ou piégés.

Dans un premier temps, la Demanderesse a identifié des agents chimiques susceptibles de protéger le substrat cellulosique contre l'attaque de l'eau de Javel. Lesdits agents se caractérisent par le fait que leur formule chimique renferme au moins un atome d'azote (en α d'un atome de carbone). Ils présentent une activité antioxydante.
Il s'agit, notamment :
- de l'éthanolamine (C₂H₇ON) ;
- de la diéthanolamine (C₄H₁₁O₂N) ;
- de la triéthanolamine (C₆H₁₅O₃N) ;
- de la N-(hydroxyméthyl)nicotinamide (C₇H₈O₂N₂) ;
- de la N-(hydroxyméthyl)phtalimide (C₉H₇O₃N) ;
- de l'acétanilide (C₈H₉ON) ;
- de l'acétamide (C₂H₅ON) ;
- de la caféine (C₈H₁₀O₂N₄) ;
- de la cystéine (C₃H₇O₂NS) ;
- de l'alanine (C₃H₇O₂N) ;
- de la 3,4-dihydroxyphénylalanine (C₉H₁₁O₄N) ;
- de la diméthyloldihydroxyéthylèneurée (DMDHEU : C₅H₁₀O₅N₂) et de ses dérivés;
- de la diméthyldihydroxyéthylèneurée (DMeDHEU : C₅H₁₀O₃N₂) et de ses dérivés ;
- d'aminopolyamides à fonctions réactives de type époxy et/ou azétidinium;
- de copolyacrylates à fonctions réactives de type N-méthylol.

De façon plus générale, sont susceptibles d'intervenir, aux fins de l'invention, dans le réseau de cellulose d'un matériau à base de cellulose régénérée, des amines, des amides, des acides aminés, des dérivés de l'urée, des polymères présentant des fonctions du type :

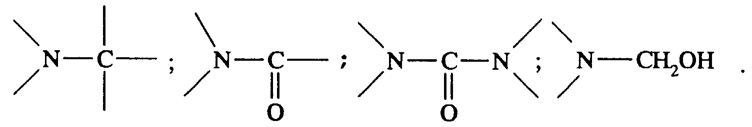

Les matériaux à base de cellulose régénérée, qui renferment de façon durable au moins un composé de ce type, font partie intégrante de la présente invention (à l'exclusion de ceux connus de l'art antérieur :
- certains textiles ennoblis avec de tels composés et plus précisément les textiles en fibres cellulosiques et leurs mélanges avec des fibres synthétiques qui renferment à titre d'apprêt, pour les rendre infroissables et irrétrécissables de la DMDHEU (ou un de ses dérivés) ou de la DMeDHEU (ou un de ses dérivés); les textiles renfermant des polymères du type copolyacrylate à fonctions N-méthylol à titre d'agents d'enduction et/ou d'imprégnation et les nontissés renfermant de tels polymères à titre de liants;
- les éponges et articles fibreux décrits dans la demande de brevet WO-A-94 12034 qui renferment de tels agents, biocides, au sein de complexes métalliques;
- les éponges décrites dans le brevet US-A-5,002,984 qui renferment de tels agents du type polyamide à titre d'agents complexants d'ions métalliques).

Lesdits composés ou agents, susceptibles de protéger le substrat cellulosique, doivent pouvoir d'une part être introduits, sans dommage, dans le réseau de cellulose et d'autre part y rester un certain temps pour exercer leur action au cours de l'utilisation dudit substrat.

A ces fins, on choisira avantageusement des agents chimiques qui, à l'état libre, avant leur incorporation dans le réseau de cellulose :
- présentent un point d'ébullition compatible avec le procédé mis en oeuvre pour leurdite incorporation ;
- sont stables en milieu aqueux ;
- sont avantageusement solubles en milieux aqueux ;
- comportent avantageusement dans leur formule au moins une fonction chimique susceptible de réagir avec la cellulose.

Ces conditions permettent, éventuellement rendent plus aisée, l'incorporation et optimise le maintien desdits agents au sein du réseau de cellulose.
. L'agent intervenant doit présenter une faible tension de vapeur aux températures rencontrées lors de son incorporation. Il convient en effet d'être en mesure d'incorporer une quantité maximale dudit agent dans des conditions raisonnables.
. L'agent intervenant doit être stable en milieu aqueux. Ceci est imposé, tant en référence au procédé d'incorporation dudit agent dans le matériau alvéolaire cellulosique qu'en référence aux utilisations ultérieures dudit matériau.
. L'agent intervenant est avantageusement soluble en milieu aqueux. L'incorporation d'agents insolubles n'est pas exclue. Toutefois, elle implique l'utilisation et le recyclage de solvant(s) et/ou de dispersion(s); ce qui alourdit la mise en oeuvre du procédé d'incorporation.
. L'agent intervenant comporte avantageusement dans sa formule au moins une fonction chimique susceptible de réagir avec la cellulose. On préfère tout particulièrement dans le cadre de l'invention, l'intervention de ce type d'agent. La réaction mise en oeuvre peut être de différents types. Elle doit pouvoir être mise en oeuvre dans des conditions qui n'altèrent pas de façon sensible le substrat cellulosique. On exclut de devoir mettre en oeuvre, pour la fixation d'agents dans le réseau de cellulose, des réactions en milieu très basique ou à haute température ... Avantageusement la réaction mise en oeuvre crée au moins une liaison covalente entre ledit agent et la cellulose.

La Demanderesse a principalement développé deux variantes de l'invention. Selon la première, elle a obtenu des matériaux à base de cellulose régénérée qui présentent une résistance améliorée à l'eau de Javel en incorporant dans leur réseau de cellulose une quantité efficace de molécules de "faible" masse moléculaire, de molécules simples. Selon la seconde, elle a obtenu le même type de matériaux en incorporant dans leur réseau de cellulose une quantité efficace de molécules de masse moléculaire beaucoup plus élevée, de polymères.

Dans un esprit de simplification, on parle, dans la présente description et les revendications qui y sont annexées, de molécules, selon la première variante et de polymères, selon la seconde variante.

On décrit ci-après, plus en détail, ladite première variante.

Selon celle-ci, on trouve, fixé et/ou piégé dans le réseau de cellulose des matériaux à base de cellulose régénérée de l'invention, au moins un type de molécule (molécule simple). La fixation est avantageusement assurée par le biais d'au moins une liaison covalente. Deux liaisons covalentes peuvent intervenir. Dans cette hypothèse, la fixation de l'agent protecteur au sein du réseau de cellulose a entrainé une certaine réticulation de celui-ci.

La molécule intervenante, qui comporte dans sa formule au moins un atome d'azote en α d'un atome de carbone, comporte avantageusement dans celle-ci au moins un motif du type :

〉N-CHR-OR'.

On a généralement : R=H, OH ou un radical complexe (notamment dans le cas de molécules cycliques) ;

R'=H, -CH₃, -C₂H₅.

L'intervention de molécules présentant le motif

〉N-CH₂OH(N-méthylol)

ou le motif

〉N-CH₂OR'

est particulièrement préférée.

On préconise, notamment, aux fins de l'invention, l'intervention, à titre d'agents protecteurs, de :
- la N-(hydroxyméthyl)nicotinamide (formule I ci-après);
- la N-(hydroxyméthyl)phtalimide (formule II ci-après);
- la diméthyloldihydroxyéthylèneurée (DMDHEU : formule III ci-après) et de ses dérivés;
- la diméthyldihydroxyéthylèneurée (DMeDHEU : formule IV ci-après) et de ses dérivés.

Lesdites formules chimiques de ces composés sont les suivantes :

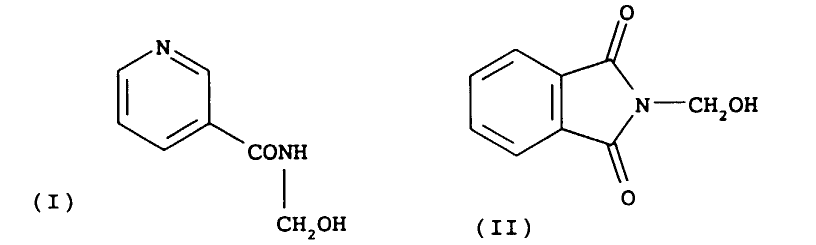

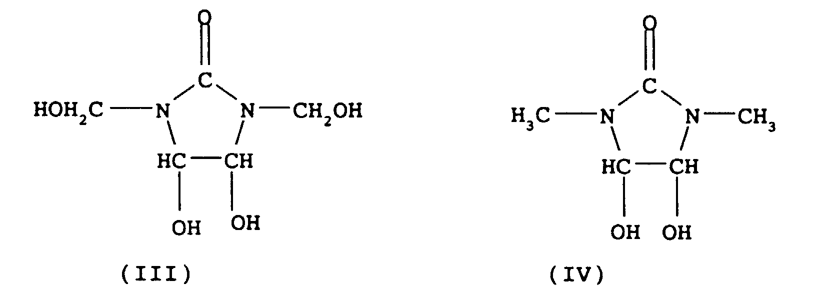

Les matériaux à base de cellulose régénérée de l'invention qui renferment lesdits composés sont particulièrement préférés. Lesdits composés sont avantageusement liés à la cellulose, principalement par des ponts éthers.

On rappelle ici que des composés du type de ceux répondant aux formules (III) et (IV) sont commercialisés, notamment par la société HOECHST, (sous la forme de résines référencées ARKOFIX PL8211, ARKOFIX V4200 (DMDHEU et dérivés) et ARKOFIX NZF (DMeDHEU et dérivés)) comme apprêts textiles. Lesdits apprêts sont destinés à rendre infroissables et irrétrécissables des textiles en fibres cellulosiques ou mélanges de fibres cellulosiques et synthétiques.

On n'exclut pas, selon cette variante de l'invention, l'intervention de molécules présentant dans leur formule d'autres motifs que celui 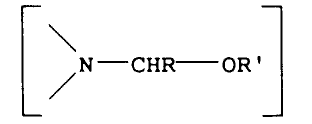 indiqué ci-dessus et notamment celle de molécules présentant dans leur formule le motif :

〉N-CH₂CH₂OR'

ou au moins une fonction aldéhyde et une fonction amide.

Ces molécules sont introduites dans les matériaux à base de cellulose régénérée, avantageusement à la fin de leur procédé de fabrication et mises à réagir, pour leur fixation à la cellulose, dans des conditions adaptées. On met généralement en oeuvre un traitement thermique, en présence d'un catalyseur. Ledit traitement est précisé plus avant dans le présent texte.

On n'exclut pas, comme indiqué ci-dessus, dans le cadre de cette première variante de l'invention, que les molécules intervenantes ne soient pas liées au réseau de cellulose par une liaison covalente. Elles peuvent y avoir été amenées et y être simplement piégées, notamment dans un latex ou une résine... On a pu également pour le piégage desdites molécules faire intervenir un agent chélateur. Ledit agent est introduit dans la cellulose préalablement ou en même temps que la molécule. A titre d'agent chélateur, on peut faire intervenir un complexe polymère ligand/métal de transition du type de ceux décrits dans la demande de brevet WO 94/12034. On préconise tout particulièrement l'intervention du chitosane à titre de polymère ligand.

On décrit ci-après, la seconde variante de l'invention, selon laquelle intervient dans le réseau de cellulose des matériaux à base de cellulose régénérée, à titre d'agent(s) protecteur(s), au moins un polymère.

Selon ladite variante, lesdits matériaux renferment une quantité efficace d'au moins un polymère, qui, à l'état libre, comporte avantageusement dans sa formule des fonctions du type : 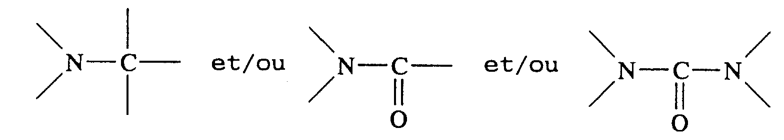 et/ou

〉N-CH₂OH .

La présence de telles fonctions, dans la chaîne principale du polymère et/ou dans au moins une de ses chaînes latérales, assure la présence d'atomes d'azote. On peut parler de fonctions amines, amides et de dérivés d'urée et de N-méthylol ...

Ledit polymère est fixé et/ou piégé dans le réseau de cellulose. Un tel résultat a pu être obtenu par simple mélange intime dudit polymère et de la cellulose en solution, avant régénération de celle-ci. (On a pu ainsi faire intervenir du chitosane). On a pu, également, introduire ledit polymère dans le matériau, en mélange dans un latex ou une résine puis traiter thermiquement le tout... Avantageusement, on fait intervenir un polymère autoréticulable et/ou condensable sur la cellulose.

De façon préférée, les matériaux de l'invention renferment donc un polymère réticulé, dont la formule comporte les fonctions précisées ci-dessus, fixé et/ou piégé dans le réseau de cellulose. On développe ci-après cette variante de l'invention.

Ledit polymère a avantageusement été réticulé in-situ, c'est-à-dire incorporé dans le réseau de cellulose, non réticulé, puis soumis à un traitement qui assure sa réticulation. Une telle réticulation in-situ assure sa fixation, son piégage dans le réseau de cellulose.

Le polymère intervenant doit dans ce cas, outre les atomes d'azote, présenter des fonctions chimiques réactives qui permettent sa réticulation (on peut également parler d'autoaddition). Avantageusement, il présente également des fonctions chimiques capables de réagir avec la cellulose. Selon une variante particulièrement préférée, il présente des fonctions chimiques qui permettent à la fois sa réticulation et sa réaction avec la cellulose. Ce dernier type de réaction crée avantageusement des liaisons covalentes mais l'intervention de liaisons d'un autre type n'est pas exclue.

Selon cette variante de l'invention, on a donc fixé et/ou piégé dans le réseau de cellulose des polymères réticulables (autocondensables) qui présentent des fonctions amines et/ou amides et/ou dérivées de l'urée et avantageusement des fonctions susceptibles de réagir avec la cellulose. De telles fonctions peuvent notamment consister en des groupes azétidinium et/ou époxy et/ou N-méthylol.

Des polyalkyléneamines (aminopolyamides) conviennent à cette fin et notamment des résines polyamide-épichlorhydrine (à base d'acide adipique, de diéthylènetriamine et d'épichlorhydrine) qui présentent des groupes fonctionnels azétidinium et/ou époxy. Ces résines sont réticulables (autocondensables) notamment sous l'action de la chaleur. Elles peuvent également réticuler à température ambiante, en présence de catalyseur (base) avec toutefois une cinétique plus lente.

De telles résines sont notamment commercialisées par la société HERCULES sous les références commerciales KYMENE 557H, KYMENE 617, KYMENE SLX2, KYMENE ULX (aminopolyamides à fonctions réactives azétidinum), KYMENE 450 (aminopolyamide à fonctions réactives époxy). A ce jour, elles sont utilisées dans l'industrie papetière.

Des copolyacrylates renfermant des atomes d'azote conviennent également à cette fin et notamment des dispersions aqueuses de copolyacrylates qui présentent des fonctions N-méthylol. Il s'agit de copolyacrylates anioniques, autocondensables, notamment sous l'action de la chaleur.

Des dispersions aqueuses de tels copolyacrylates sont notamment commercialisées par la société BASF sous la référence commerciale ACRONAL. A ce jour, elles sont utilisées, à titre de liant pour des nontissés et à titre d'agent d'enduction et/ou d'imprégnation pour des étoffes tissées et textiles à mailles.

Ces polymères autocondensables sont introduits dans les matériaux de l'invention, généralement à la fin de leur procédé de fabrication puis réticulés (généralement par chauffage) au sein desdits matériaux. Ils y sont alors fixés et/ou piégés et assurent leur rôle d'agents protecteurs vis-à-vis de l'eau de Javel.

On a toutefois noté que leur intervention au sein du réseau de cellulose est généralement préjudiciable à l'hydrophilie du produit final. Avantageusement, on fait donc intervenir avec ce type d'agent protecteur (polymère réticulable), au moins un tensioactif. Grâce à l'intervention de ce tensioactif on préserve l'hydrophilie du matériau. Dans le choix dudit tensioactif, on tiendra bien évidemment compte de la nature du milieu, des conditions de la réaction de condensation (de réticulation) du polymère. Ainsi, avantageusement, les tensioactifs intervenant présentent les caractéristiques suivantes :
- ils sont partiellement solubles ou dispersables dans l'eau;
- ils présentent des points d'ébullition supérieurs à 100°C ;
- ils sont au moins partiellement miscibles aux solutions de polymères (résines) ;
- ils sont piégables dans le réseau du polymère condensé pour n'être que partiellement, progressivement éliminés au cours de l'utilisation du matériau alvéolaire cellulosique.

Par ailleurs, ils sont avantageusement non moussants et comportent avantageusement au moins un atome d'azote dans leur formule. On peut ainsi dans certains cas renforcer la protection du matériau les contenant à l'eau de Javel.

A titre indicatif, on précise ci-après des tensioactifs qui peuvent intervenir, conjointement à des polymères tels que décrits ci-dessus, dans les matériaux alvéolaires cellulosiques de l'invention :
- EMCOL CC36 (chlorure d'ammonium quaternaire de polyoxypropylène commercialisé par la société WITCO);
- EMPILAN LME (monoéthanolamide d'acide laurique commercialisé par la société MARCHON FRANCE);
- EMPILAN CME (monoéthanolamide d'acide gras de coprah commercialisé par la société MARCHON FRANCE);
- CRILLON LDEAM (diéthanolamide d'acide laurique commercialisée par la société CRODA CHEMICALS LTD);
- COMPERLAN KD (diéthanolamide d'acide gras de coprah commercialisée par la société HENKEL).
- ANTITERRA U 80 (mélange de polyaminoamides insaturés et de polyesters acides de basse masse moléculaire commercialisé par la société BYK CHEMIE).

Dans le cadre de cette variante de l'invention, le matériau alvéolaire cellulosique renferme donc avantageusement au moins un tensioactif, retenu dans la structure du polymère réticulé. La quantité de tensioactif nécessaire pour préserver les propriétés d'hydrophilie dudit matériau peut varier sur une très large échelle. Elle est généralement comprise entre 0,05 et 5% en poids (par rapport au poids de cellulose séche).

Pour ce qui concerne la quantité d'agent chimique protecteur renfermée dans le matériau, elle peut également varier sur une très grande échelle. Elle est évidemment suffisante pour l'obtention du résultat escompté. Elle peut être limitée, dans certains cas, par le nombre de fonctions réactives accessibles dans le réseau de cellulose. En tout état de cause, on veille à ne pas faire intervenir trop d'agent chimique afin de ne pas modifier de façon importante les caractéristiques finales du matériau à base de cellulose régénérée (telles que sa capacité d'absorption, sa résistance mécanique). La quantité d'agent protecteur, au sein du réseau de cellulose, est généralement comprise entre 0,1 et 5 % en poids (par rapport au poids de cellulose sèche).

Sur le produit fini, on peut notamment approcher cette quantité en mesurant la teneur en azote élémentaire. Cette teneur peut être mesurée par la méthode de Kjeldahl (méthode qui consiste à transformer l'azote présent dans une substance organique en sulfate d'ammonium par attaque de la substance par de l'acide sulfurique et un catalyseur adapté (poudre de cuivre, mercure, etc.) et à doser le sulfate d'ammonium ainsi formé).

La présente invention a également pour objet l'utilisation des agents chimiques dont la nature a été précisée ci-dessus - et notamment des molécules et/ou polymères plus spécifiquement décrits - pour conférer à des matériaux à base de cellulose régénérée une résistance améliorée à l'eau de Javel. Une telle utilisation est nouvelle et inventive y compris pour lesdits agents déjà connus comme apprêt textile, agent d'enduction et/ou d'imprégnation pour textiles, liant pour nontissés, biocide ou agent complexant de métaux. La présente invention a donc également pour objet l'utilisation d'au moins un agent chimique, comportant dans sa structure au moins un atome d'azote en α d'un atome de carbone, pour conférer à des matériaux à base de cellulose régénérée une résistance améliorée à l'eau de Javel. Ledit agent chimique comporte avantageusement dans sa structure au moins un motif du type 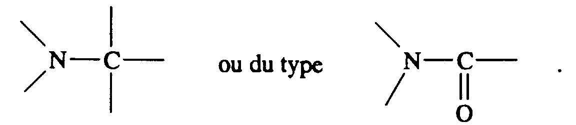 Plus particulièrement, la présente invention concerne donc aussi l'utilisation :
- de molécules qui présentent dans leur formule au moins un motif du type

   〉N-CHR-OR'

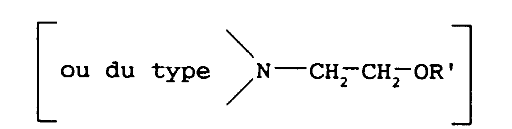

   et avantageusement de molécules choisies parmi la N-(hydroxylméthyl)nicotinamide, la N-(hydroxyméthyl)phtalimide, la diméthyloldihydroxyéthylèneurée (DMDHEU) et ses dérivés, la diméthyldihydroxyéthylèneurée (DMeDHEU) et ses dérivés; et
- de polymères dont la formule comporte des fonctions du type : 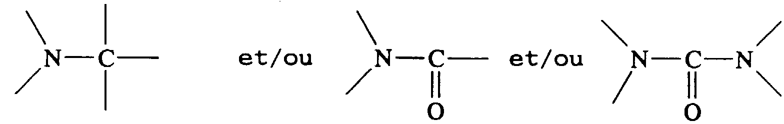 et/ou

   〉N-CH₂OH

   et avantageusement de résines polyamide-épichlorhydrine, réticulables sous l'action de la chaleur, qui présentent des fonctions azétidinium et/ou époxy ou de dispersions aqueuses de copolyacrylates, réticulables sous l'action de la chaleur, qui présentent des fonctions N-méthylol ;
pour conférer à des matériaux à base de cellulose régénérée une résistance améliorée à l'eau de Javel.

Cet aspect de l'invention - utilisation d'agent(s) chimique(s) spécifique(s) pour conférer à des matériaux à base de cellulose régénérée une meilleure résistance à l'eau de Javel - peut s'appréhender comme une méthode de protection desdits matériaux vis-à-vis de l'eau de Javel, comme une méthode visant à améliorer la résistance desdits matériaux à l'eau de Javel.

On se propose maintenant de décrire le dernier objet de la présente invention à savoir le procédé de préparation des matériaux à base de cellulose régénérée dont on a détaillé ci-dessus les caractéristiques.

Ledit procédé reprend en fait les étapes successives des procédés classiques de fabrication desdits matériaux, procédés connus de l'homme du métier et de façon caractéristique, complète et/ou modifie lesdites étapes par :
- l'introduction de la quantité efficace d'au moins un agent chimique convenable, à l'état libre, en vue de sa répartition dans le produit fini. Ladite introduction est mise en oeuvre au cours de l'une desdites étapes ou à l'issue de celles-ci ;
- si nécessaire, un traitement spécifique pour la fixation et/ou le piégage dudit agent au sein du réseau de cellulose.(Ledit traitement spécifique consiste généralement en un traitement thermique, mis en oeuvre en présence ou non de catalyseur).

De façon générale, le procédé de l'invention comprend :
- la préparation d'une solution cellulosique,
- l'adjonction éventuelle à ladite solution d'additifs solubles ou insolubles pour générer un mélange;
- la mise en forme de ladite solution ou dudit mélange;
- l'introduction dans un milieu adéquat et/ou le chauffage de ladite solution et/ou dudit mélange pour que soit régénérée la cellulose.

De façon plus particulière, il comprend :
- pour la préparation de matériaux alvéolaires cellulosiques :
   + la préparation d'une masse pâteuse à partir d'une solution cellulosique telle que de la viscose, de matières fibreuses, de pigments et d'agents porophores;
   + la mise en forme de cette masse par notamment moulage, enduction de part et d'autre ou d'un seul côté d'au moins une grille ou dépôt sur une bande porteuse;
   + le chauffage de celle-ci, éventuellement dans un milieu adéquat, pour que s'exerce l'action desdits agents porophores et que soit régénérée la cellulose; (ceci a été explicité en amont dans le présent texte)
- pour la préparation de fibres, fils, feuilles, textiles et nontissés :
   + la préparation d'une solution cellulosique par transformation chimique ou solubilisation directe de la cellulose;
   + l'adjonction éventuelle à ladite solution d'additifs tels que des pigments;
   + la mise en forme de celle-ci par extrusion à travers une filière;
   + l'introduction de celle-ci dans un milieu adéquat pour que soit précipitée et/ou régénérée la cellulose.

A ces étapes principales, familières à l'homme du métier, peuvent s'en ajouter d'autres, classiques, tout aussi familières à l'homme du métier et se combinent de façon caractéristique l'étape ou les étapes supplémentaire(s) indiquée(s) ci-dessus (introduction d'au moins un agent actif + éventuellement traitement spécifique pour sa fixation et/ou son piégage dans le réseau de cellulose).

Les agents susceptibles de résister aux conditions du procédé (molécules et/ou polymères) sont avantageusement introduits dans la solution cellulosique. Dans le cadre de la préparation de matériaux alvéolaires cellulosiques, ils sont avantageusement introduits conjointement aux matières fibreuses, pigments, agents porophores et se trouvent donc dans la masse pâteuse. De tels agents, introduits avant la régénération de la cellulose, peuvent être directement fixés et/ou piégés dans le réseau de cellulose lors de sa formation. A cette fin, on n'aura donc pas à mettre en oeuvre de traitement spécifique.

Lesdits agents susceptibles de résister aux conditions du procédé peuvent, toutefois, comme leurs homologues, "plus fragiles", être introduits au cours des étapes qui suivent la régénération de la cellulose, étapes mises en oeuvre dans des conditions plus douces. Différents modes d'introduction peuvent être envisagés, comme l'aspersion, l'enduction ou l'imprégnation plein bain du matériau. L'excès de solution, renfermant lesdits agents, peut être retiré par pressage ou calandrage.

Dans cette hypothèse d'introduction de l'agent après la régénération de la cellulose, il est généralement obligatoire de prévoir un traitement supplémentaire spécifique du matériau alvéolaire; traitement destiné à assurer la fixation et/ou le piégage dudit agent dans ledit matériau. Comme indiqué ci-dessus, ledit traitement consiste généralement en un traitement thermique.

Ainsi, pour la fixation des molécules décrites ci-dessus, intervenant selon la première variante de l'invention, procède-t-on généralement de la manière précisée ci-après. Lesdites molécules, avantageusement celles de formule (I), (II), (III) ou (IV) sont introduites en solution aqueuse, notamment par aspersion, enduction ou imprégnation plein bain, dans le réseau de cellulose déjà constitué (après l'étape de régénération de la cellulose).

Le matériau renfermant lesdites molécules est alors traité thermiquement pour fixer lesdites molécules audit matériau par, avantageusement, au moins une liaison covalente. Le traitement thermique fait avantageusement intervenir un catalyseur. Ceci permet notamment d'opérer à des températures raisonnables, de l'ordre de 80 à 100°C, pendant des durées raisonnables. Le catalyseur doit être introduit avant ledit traitement thermique dans le réseau de cellulose. Il est généralement introduit conjointement aux molécules.

L'homme du métier, vu la nature des molécules intervenant et compte tenu du contexte, saura sélectionner le catalyseur adéquat. Avantageusement :
- il est stable et soluble en milieu aqueux. Pour ce qui concerne sa solubilité, on fera la même remarque que précédemment. L'utilisation de composés insolubles n'est pas exclue mais elle implique l'intervention et le recyclage de solvant(s) et/ou de dispersions, ce qui alourdit la mise en oeuvre du procédé;
- il présente une tension de vapeur faible aux températures rencontrées lors de l'étape de fixation des molécules;
- il est évidemment compatible et adapté auxdites molécules.

A titre illustratif, on cite ci-après, deux catalyseurs, convenant notamment pour la fixation au réseau de cellulose des molécules de formule (I), (II) (III) ou (IV) : les catalyseurs NKS et NKD commercialisés par la société HOECHST. Ces catalyseurs sont à base de sels métalliques et d'acides organiques.

Lorsqu'intervient un latex, une résine ou un agent chélateur, renfermant les molécules actives, on procède de manière classique à savoir, par exemple par imprégnation du matériau et traitement thermique dudit matériau imprégné.

Lorsqu'un agent chélateur intervient, on peut également procéder comme indiqué dans la demande de brevet WO 94/12034 i.e. incorporer ledit agent ou au moins un de ses constituants principaux (le polymère ligand) dans la solution cellulosique conjointement à ses autres constituants (métal de transition) si nécessaire et à la molécule active ou, selon une variante, incorporer seulement ledit agent ou au moins un de ses constituants principaux dans ladite solution cellulosique ; ses autres constituants et la molécule active n'intervenant qu'après la régénération de la cellulose.

On notera d'une manière générale, que l'introduction de l'agent chimique, actif au sens de l'invention, peut se dérouler en plusieurs étapes, notamment si un produit tiers intervient pour sa fixation.

De la même façon, pour la fixation et/ou le piégage des polymères, intervenant selon la seconde variante de l'invention, procède-t-on généralement de la manière précisée ci-après. Lesdits polymères, avantageusement des polyalkylèneamines ou copolyacrylates réticulables, sont introduits, notamment par aspersion, enduction ou imprégnation plein bain, dans le réseau de cellulose déjà constitué (après l'étape de régénération de la cellulose).

Le matériau renfermant lesdits polymères est alors traité thermiquement pour réticuler lesdits polymères et avantageusement les fixer au réseau de cellulose. Un tel traitement thermique est généralement mis en oeuvre vers 100°C pendant 1 à 2 heure(s) sans catalyseur. On peut toutefois souhaiter faire intervenir un catalyseur (base), notamment à plus basse température, pour accélérer la réaction.

On rappelle ici que lesdits polymères affectent généralement l'hydrophilie du matériau et qu'ils sont avantageusement utilisés avec au moins un tensioactif. Selon cette variante du procédé de l'invention, on introduit donc dans le matériau, avant son traitement thermique une quantité efficace d'au moins un agent tensioactif. Avantageusement, on introduit en même temps, ledit polymère et ledit tensioactif.

Des polymères actifs au sens de l'invention peuvent également être introduits dans le matériau en mélange avec un latex ou une résine. Ledit matériau est avantageusement imprégné dudit mélange et ensuite traité thermiquement.

Des polymères, tels que le chitosane, peuvent également, comme déjà précisé ci-dessus, intervenir plus en amont du procédé de préparation des matériaux à base de cellulose régénérée, avant la régénération de la cellulose.

On illustre l'invention par les exemples ci-après.

On a préparé et testé (par évaluation de la résistance à la rupture avant et après vieillissement à l'eau de Javel) des matériaux alvéolaires cellulosiques selon l'invention, plus précisément des éponges.

On a utilisé, comme matériau de départ, des éponges cellulosiques sèches de l'art antérieur (A), qui présentent les caractéristiques suivantes :
- longueur (à l'état sec) : 102 ± 2 mm
- largeur (à l'état sec) : 81 ± 2 mm
- épaisseur (à l'état sec) : 50 ± 2 mm
- masse sèche : 15,1 ± 0,1 g

A partir desdites éponges de l'art antérieur (A), on a préparé des éponges selon l'invention (B).

On a testé les éponges (A) et (B), avant et après vieillissement à l'eau de Javel. On a, en fait, effectué à partir d'éprouvettes prélevées dans le corps desdites éponges, au moins quatre mesures de ténacité :
a : ténacité de l'éponge A avant vieillissement
a': ténacité de l'éponge A après vieillissement
b : ténacité de l'éponge B obtenue à partir de l'éponge A avant vieillissement
b': ténacité de l'éponge B obtenue à partir de l'éponge A après vieillissement.

On a toujours observé a ≈ b, de l'ordre de 2 daN/cm².

A l'issue de chaque expérience, on mesure le pourcentage de ténacité résiduelle :
pour l'éponge témoin : a'/a (de l'ordre de 20%)
pour l'éponge traitée : b'/b ≈ b'/a .

Les valeurs a, a', b, b' sont mesurées à l'aide d'un dynamomètre (LHOMARGY ou INSTRÖN avec cellule 0-100 daN).

Pour la réalisation d'essais comparatifs, on prélève dans les éponges des éprouvettes "identiques" (même sens de découpe, mêmes dimensions). Chaque éprouvette est fixée entre les machoires du dynamomètre, distantes de 20 mm, en étant parfaitement centrée. On effectue la mesure de la valeur de rupture, à une vitesse de traction de 300mm/min.

On a obtenu les éprouvettes selon le mode opératoire décrit ci-après.
Lot témoin (avant vieillissement)
- on immerge les éponges sèches dans de l'eau ;
- on rince, essore lesdites éponges témoins ;
- on découpe des éprouvettes de 5cm² dans celles-ci (5 cm de largeur x 1 cm d'épaisseur) dans les deux sens (largeur, longeur);
- on conserve lesdites éprouvettes dans un sac plastique (afin d'éviter qu'elles ne sèchent) jusqu'au test.
Lot vieilli (après vieillissement)
- on met dans un bain thermostaté à 25°C un bécher plastique de 31 qui contient 2 litres d'eau de Javel à 1,2° Cl (soit 3,8 g/l de chlore actif);
- on attend que la solution d'eau de Javel se stabilise à la température de 25°C ;
- on ajuste le pH de ladite solution à 7 en utilisant H₂SO₄;
- on immerge complètement dans ledit bécher de 3 litres 2 éponges;
- on maintient lesdites éponges immergées pendant 30 min (à l'aide d'un autre bécher lesté avec de l'eau à 25°C) (immersion d'1 cm environ)
- à l'issue desdites 30 minutes, on sort les éponges et on les rince abondamment selon un protocole bien établi ;
- on découpe alors dans celles-ci des éprouvettes de 5 cm² (5 cm x 1 cm) dans un sens pour la première éponge, dans l'autre sens pour la seconde éponge;
- on conserve lesdites éprouvettes dans un sac plastique, jusqu'au test.

On s'est par ailleurs intéressé au caractère hydrophile des éponges de l'invention, en mesurant notamment leur mouillabilité (temps, exprimé en secondes, nécessaire à une éponge posée à la surface de l'eau pour se mouiller complètement).

Pour cette mesure, on procéde de la matière suivante :
- l'éponge est séchée, à l'étuve, 3h à 105°C;
- on la laisse refroidir;
- on la pose à plat à la surface de l'eau et on déclenche un chronomètre ;
- on arrête celui-ci dès que l'éponge est complètement mouillée.

Pour l'obtention de résultats comparatifs, on utilisera évidemment des éprouvettes de même épaisseur, dans les mêmes conditions.

On a pu ainsi vérifier que l'incorporation de simples molécules, en des quantités raisonnables (suffisantes à l'obtention du résultat escompté) ne modifie que peu le caractère hydrophile des éponges.

### Example 1 : Mise en évidence de l'activité des agents protecteurs non fixés

Des tests d'oxydation en milieu neutre ont été réalisés avec des éponges de l'art antérieur (A) en introduisant, dans la solution d'eau de Javel, 1% en masse d'agent protecteur pur (par rapport au poids de cellulose sèche) juste avant le début de la phase d'attaque. On a obtenu les résultats suivants :

| | Ténacité résiduelle (a/a') % | |
|---|---|---|
| | avec agent protecteur | sans agent protecteur* |
| ARKOFIX V 4200 | 46 | 13 |
| ARKOFIX NZF | 32 | 13 |
| N-(hydroxyméthyl)nicotinamide | 80 | 12 |
| KYMENE 557H | 38 | 6 |

| | | |
|---|---|---|
| * On notera que les valeurs données dans cette colonne fluctuent dans la mesure où les tests ont été réalisés sur des lots d'éponges différents . D'un lot d'éponges à l'autre, le matériau n'est jamais exactement le même. | | |

### Exemple 2 : Eponges traitées avec la résine ARKOFIX V4200 (DMDHEU et dérivés)

On réalise une solution aqueuse contenant 1,9 % (en poids) de résine ARKOFIX V 4200 et 0,48% (en poids) de catalyseur NKS. On asperge avec 40g de cette solution des éponges cellulosiques sèches (A).

Les éponges ainsi traitées sont maintenues dans une étuve ventilée dont la température est fixée à 85°C pendant 24 heures puis sont abondamment rincées, puis séchées à 50°C pendant 20 heures. On obtient des éponges de l'invention (B).

Leur résistance à l'oxydation en milieu neutre est alors mesurée (test de vieillissement tel que décrit ci-dessus). On observe une ténacité résiduelle de 24% (b'/a) contre 6% pour l'éponge témoin (a'/a).

### Exemple 3 : Eponges traitées avec de la N-(hydroxyméthyl)nicotinamide

On réalise une solution aqueuse contenant 1,9% (en poids) de N-(hydroxyméthyl)nicotinamide et 0,48% (en poids) de catalyseur NKS. On asperge avec 40 g de cette solution des éponges cellulosiques sèches (A).

Les éponges ainsi traitées sont maintenues 24 heures dans une étuve ventilée dont la température est fixée à 85°C, puis 15 minutes dans une étuve ventilée dont la température est maintenue à 150°C puis sont abondamment rincées (20 compressions sous l'eau courante).

Leur résistance à l'oxydation en milieu neutre est alors mesurée (test de vieillissement tel que décrit ci-dessus). On observe une tenacité résiduelle de 52% (b'/a) contre 19% pour l'éponge témoin (a'/a).

La permanence du traitement a par ailleurs été vérifiée en soumettant les éponges traitées à un cycle machine à laver à 60°C avec lessive et en les soumettant, après ledit lavage, à un nouveau test d'oxydation en milieu neutre. La ténacité résiduelle est de 48% pour l'éponge traitée contre 28% pour l'éponge témoin.

### Exemple 4 : Eponges traitées avec une polyalkylèneamine à fonctions azétidinium

On réalise une solution aqueuse diluée contenant 3,125% (en poids) d'une solution commerciale de KYMENE 557H (à 12% d'extrait sec). On asperge avec 40g de cette solution des éponges cellulosiques sèches (A).

Les éponges ainsi traités sont maintenues dans une étuve ventilée dont la température est fixée à 100°C pendant 1 heure.

Leur résistance à l'oxydation en milieu neutre est alors mesurée. On observe une ténacité résiduelle de 43% (b'/a) contre 7% pour l'éponge témoin.

Leur mouillabilité est également mesurée. Elle est très largement inférieure à celles des éponges témoins (temps de plongée supérieurs à 180 s contre 12 s pour les éponges témoins).

### Exemple 5 : Eponges traitées avec une polyalkylénamine à fonctions azétidinium et un tensioactif

On réalise une solution aqueuse diluée contenant 3,125% (en poids) d'une solution commerciale de KYMENE 557H (à 12% d'extrait sec) et 1,87% (en poids) d'ANTITERRA U80. On asperge avec 40g de cette solution des éponges cellulosiques (A). Les éponges ainsi traitées sont maintenues dans une étuve ventilée dont la température est fixée à 100°C pendant 1 heure.

Leur résistance à l'oxydation en milieu neutre est alors mesurée. On observe une ténacité résiduelle de 45% (b'/a) contre 8% pour l'éponge témoin.

Leur mouillabilité reste inférieure à celle des éponges témoins (temps de plongée de 45s contre 12s pour les éponges témoins).

### Exemple 6 : Eponges traitées avec une polyalkyléneamine à fonctions époxy et un tensioactif

On réalise des solutions aqueuses diluées contenant 3,125% (en poids) d'une solution commerciale de KYMENE 450 (à 12% d'extrait sec) et 1,87% (en poids) d'un tensioactif choisi parmi les suivants : EMCOL CC36, ANTITEREA U80, CRILLON LDEAM, COMPERLAN KD, EMPILAN CME, EMPILAN LME.

On asperge avec 40g de cette solution des éponges cellulosiques sèches (A).

Les éponges ainsi traitées sont maintenues dans une étuve ventilée dont la température est comprise entre 80°C et 100°C pendant au moins une heure.

La résistance de ces éponges (B) à l'oxydation en milieu neutre est alors mesurée. On estime également leur hydrophilie. Les résultats suivants ont été obtenus :

| | Tenacité résiduelle (%) | | Temps de plongée (secondes) | |
|---|---|---|---|---|
| | produit | témoin | produit | témoin |
| KYMENE 450 seul | 51 | 12 | > 180 | 12 |
| KYMENE 450+ EMCOL CC36 | 56 | 24 | 12 | 12 |
| KYMENE 450+ ANTITERRA U80 | 47 | 9 | 15 | 12 |
| KYMENE 450+ CRILLON LDEAM | 39 | 20 | 25 | 12 |
| KYMENE 450+ COMPERLAN KD | 45 | 15 | 30 | 14 |
| KYMENE 450+ EMPILAN CME | 52 | 20 | 55 | 13 |
| KYMENE 450+ EMPILAN LME | 54 | 19 | 65 | 13 |

La permanence du traitement a été vérifiée en soumettant les éponges à un cycle machine à laver à 60°C avec lessive. La résistance de ces éponges à l'oxydation en milieu neutre est alors mesurée. Les résultats suivants ont été obtenus :

| | Ténacité résiduelle (%) | |
|---|---|---|
| | produit | témoin |
| KYMENE 450+ EMCOL CC36 | 42 | 12 |
| KYMENE 450+ ANTITERRA U80 | 54 | 18 |

### Exemple 7 : Eponges traitées avec des copolyacrylates à fonctions N-méthylol

On réalise deux masses pâteuses (M₁ et M₂) à partir de viscose comprenant 19 kg d' α-cellulose, 2,8 kg de fibres de coton, 6,24 kg de lin, 0,43 kg de colorant et 1080 kg de sel de Glauber.

A la masse pâteuse M₁, on ajoute 1,68 kg d'ACRONAL 32 D commercial (dispersion aqueuse à 50% d'extrait sec); on obtient ainsi la masse pâteuse M₁'.

Les masses pâteuses M₁' et M₂ sont malaxées pendant dix minutes environ, moulées puis mises en contact avec un milieu basique (pH voisin de 12), à une température proche de 100°C pendant quelques heures, (régénération dite basique qui fait avantageusement intervenir une solution basique de sulfate de sodium).

Les produits ainsi obtenus - matériaux alvéolaires cellulosiques du type éponge - sont ensuite, selon le procédé classique, rincés, éventuellement blanchis, puis séchés et découpés en éponges.

Les masses pâteuses M₁' et M₂ conduisent respectivement aux éponges E1 et E2.

La résistance à l'oxydation en milieu neutre desdites éponges est alors mesurée (test de vieillissement tel que décrit ci-dessus).

On observe une ténacité résiduelle de 60% pour les éponges traitées (E₁) contre 25% pour les éponges témoins (E₂).

La permanence du traitement a par ailleurs été vérifiée en soumettant les éponges traitées (E₁) et non traitées (E₂) à un cycle machine à laver à 60°C avec lessive et en les soumettant, après ledit lavage, à un nouveau test d'oxydation en milieu neutre. La ténacité résiduelle est de 57 % pour les éponges traitées (E₁) contre 25% pour les éponges témoins (E₂).

On observera que dans le cadre de cette variante de l'invention - intervention de copolymères acrylates à fonctions N-méthylol, avant la régénération de la cellulose - lesdits copolymères acrylates n'exercent pas d'effet préjudiciable sur l'hydrophilie des éponges traitées. Il est totalement superflu de faire intervenir dans ce contexte des tensioactifs.

## Revendications

1. Matériaux à base de cellulose régénérée, notamment choisis parmi les matériaux alvéolaires cellulosiques, les fibres, fils, feuilles, textiles et nontissés, caractérisés en ce qu'ils renferment une quantité efficace d'au moins un agent chimique, leur conférant une résistance améliorée à l'eau de Javel; ledit agent chimique comportant dans sa structure au moins un atome d'azote en α d'un atome de carbone et étant fixé par au moins une liaison covalente au réseau de cellulose et/ou piégé au sein dudit réseau; à l'exclusion :
- des textiles ennoblis avec de tels agents choisis parmi la diméthyloldihydroxyéthylèneurée (DMDHEU), la diméthyldihydroxyéthylèneurée (DMeDHEU) et leurs dérivés; des textiles renfermant de tels agents, du type copolyacrylate à fonctions N-méthylol , à titre d'agents d'enduction et/ou d'imprégnation; des nontissés renfermant de tels agents, du type copolyacrylate à fonctions N-méthylol, à titre de liants;
- des éponges et articles fibreux renfermant de tels agents, biocides, au sein de complexes métalliques;
- des éponges renfermant de tels agents, du type polyamide, à titre d'agents complexants d'ions métalliques.

2. Matériaux selon la revendication 1, consistant en des éponges ou toiles-éponges.

3. Matériaux selon l'une des revendications 1 ou 2, caractérisés en ce que ledit agent, à l'état libre, avant son incorporation dans le réseau de cellulose, comporte dans sa structure au moins une fonction chimique susceptible de réagir avec la cellulose.

4. Matériaux selon l'une quelconque des revendications 1 à 3, caractérisés en ce que ledit agent est une molécule, avantageusement fixée par au moins une liaison covalente, qui, à l'état libre, comporte dans sa formule au moins un motif du type :
〉N-CHR-OR'.
dans laquelle R représente H, OH ou un radical complexe et R' représente H, -CH₃ ou -C₂H₅.

5. Matériaux selon la revendication 4, caractérisés en ce que ledit agent, à l'état libre, est choisi parmi :
- la N-(hydroxyméthyl)nicotinamide;
- la N-(hydroxyméthyl)phtalimide;
- la diméthyloldihydroxyéthylèneurée (DMDHEU) et ses dérivés;
- la diméthyldihydroxyéthylèneurée (DMeDHEU) et ses dérivés.

6. Matériaux selon l'une quelconque des revendications 1 à 3, caractérisés en ce que ledit agent est un polymère, fixé et/ou piégé dans le réseau de cellulose, qui, à l'état libre, comporte dans sa formule des fonctions du type : 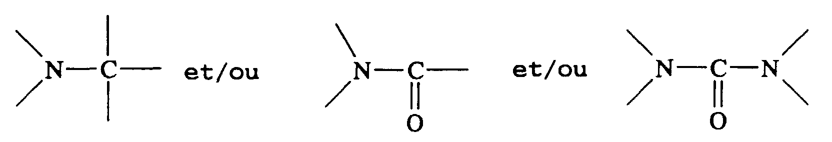 et/ou
〉N-CH₂OH .

7. Matériaux selon la revendication 6, caractérisés en ce que ledit agent, à l'état libre, est une résine polyamide-épichlorhydrine, réticulable sous l'action de la chaleur, qui présente des groupes fonctionnels azétidinium et/ou époxy.

8. Matériaux selon la revendication 6, caractérisés en ce que ledit agent, à l'état libre, est une dispersion aqueuse de copolyacrylates, réticulables sous l'action de la chaleur, qui présentent des groupes fonctionnels N-méthylol.

9. Matériaux selon l'une quelconque des revendications 6 à 8, caractérisés en qu'ils renferment au moins un tensioactif, retenu dans la structure du polymère.

10. Matériaux selon l'une quelconque des revendications 1 à 9, caractérisés en ce qu'ils renferment de 0,1 à 5% en poids, par rapport au poids de cellulose sèche, dudit (desdits) agent(s) chimique(s).

11. Utilisation d'au moins un agent chimique, comportant dans sa structure au moins un atome d'azote en α d'un atome de carbone, et avantageusement d'au moins un agent chimique tel que défini dans l'une quelconque des revendications 3 à 8, pour conférer à des matériaux à base de cellulose régénérée une résistance améliorée à l'eau de Javel.

12. Procédé pour la préparation de matériaux à base de cellulose régénérée selon l'une quelconque des revendications 1 à 10, comprenant :
- la préparation d'une solution cellulosique,
- l'adjonction éventuelle à ladite solution d'additifs solubles ou insolubles pour générer un mélange;
- la mise en forme de ladite solution ou dudit mélange;
- l'introduction dans un milieu adéquat et/ou le chauffage de ladite solution et/ou dudit mélange pour que soit régénérée la cellulose;
caractérisé en ce qu'il comprend, en outre :
- l'introduction, au cours des étapes ci-dessus ou à l'issue de celles-ci, de la quantité efficace d'au moins un desdits agents chimiques, à l'état libre, en vue de sa répartition dans le produit fini;
- si nécessaire, un traitement spécifique pour la fixation et/ou le piégage dudit agent au sein du réseau de cellulose.

13. Procédé de préparation selon la revendication 12, comprenant :
- pour la préparation de matériaux alvéolaires cellulosiques :
+ la préparation d'une masse pâteuse à partir d'une solution cellulosique telle que de la viscose, de matières fibreuses, de pigments et d'agents porophores;
+ la mise en forme de cette masse par notamment moulage, enduction de part et d'autre ou d'un seul côté d'au moins une grille ou dépôt sur une bande porteuse;
+ le chauffage de celle-ci, éventuellement dans un milieur adéquat, pour que s'exerce l'action desdits agents porophores et que soit régénérée la cellulose;
- pour la préparation de fibres, fils, feuilles , textiles et nontissés :
+ la préparation d'une solution cellulosique par transformation chimique ou solubilisation directe de la cellulose;
+ l'adjonction éventuelle à ladite solution d'additifs tels que des pigments;
+ la mise en forme de celle-ci par extrusion à travers une filière;
+ l'introduction de celle-ci dans un milieu adéquat pour que soit précipitée et/ou régénérée la cellulose.

14. Procédé selon l'une des revendications 12 ou 13, caractérisé en ce qu'il comprend un traitement thermique spécifique pour la fixation et/ou le piégage dudit agent au sein du réseau de cellulose.

15. Procédé selon l'une quelconque des revendications 12 à 14, caractérisé en ce que ledit agent est introduit, notamment par aspersion, enduction ou imprégnation plein bain, après la régénération de la cellulose.

## Patentansprüche

1. Materialien auf Basis von Regenerat-Cellulose, die insbesondere ausgewählt werden aus zellförmigen Cellulosematerialien, Fasern, Fäden, Folien, Textilien und Vliesstoffen, dadurch gekennzeichnet, daß sie eine wirksame Menge mindestens eines chemischen Agens enthalten, das ihnen eine verbesserte Beständigkeit gegen Natriumhypochloritlauge (Eau de Javel) verleiht, wobei das genannte chemische Agens in seiner Struktur mindestens ein Stickstoffatom in α-Stellung zu einem Kohlenstoffatom aufweist und durch mindestens eine kovalente Bindung an das Cellulose-Netzwerk gebunden ist und/oder in dem genannten Netzwerk eingeschlossen ist,
ausgenommen:
- Textilmaterialien, die mit Agentien, ausgewählt aus Dimethyloldihydroxyethylen-Harnstoff (DMDHEU), Dimethyldihydroxyethylen-Harnstoff (DMeDHEU) und ihren Derivaten veredelt sind; Textilmaterialien, die solche Agentien vom Copolyacrylat-Typ mit N-Methylol-Funktionen als Beschichtungs- und/oder Imprägnierungsmittel enthalten; Vliesstoffe, die solche Agentien vom Copolyacrylat-Typ mit N-Methylol-Funktionen als Bindemittel enthalten;
- Schaumstoffe (Schwämme) und Faser-Formkörper, die solche Agentien wie Biozide im Innern von Metallkomplexen enthalten; und
- Schaumstoffe (Schwämme), die solche Agentien vom Polyamid-Typ als Metallionenkomplexbildner enthalten.

2. Materialien nach Anspruch 1, die aus Schaumstoffen (Schwämmen) oder Schaumstoff-Geweben bestehen.

3. Materialien nach einem der Ansprüche 1 oder 2, dadurch gekennzeichnet, daß das genannte Agens im freien Zustand vor seiner Einarbeitung in das Cellulose-Netzwerk in seiner Struktur mindestens eine chemische Funktion aufweist, die mit der Cellulose reagieren kann.

4. Materialien nach einem der Ansprüche 1 bis 3, dadurch gekennzeichnet, daß das genannte Agens ein Molekül ist, das zweckmäßig mit mindestens einer kovalenten Bindung gebunden ist und das im freien Zustand in seiner Formel mindestens eine wiederkehrende Einheit vom Typ aufweist:
〉N-CHR-OR'
worin bedeuten:
R H, OH oder einen komplexen Rest und
R' H, -CH₃ oder -C₂H₅.

5. Materialien nach Anspruch 4, dadurch gekennzeichnet, daß das genannte Agens im freien Zustand ausgewählt wird aus:
- N-(Hydroxymethyl)nicotinamid;
- N-(Hydroxymethyl)phthalimid;
- Dimethyloldihydroxyethylen-harnstoff (DMDHEU) und seinen Derivaten; und
- Dimethyldihydroxyethylen-harnstoff (DMeDHEU) und seinen Derivaten.

6. Materialien nach einem der Ansprüche 1 bis 3, dadurch gekennzeichnet, daß das genannte Agens ein Polymer ist, das an dem Cellulose-Netzwerk fixiert und/oder in dieses eingelagert ist, und das im freien Zustand in seiner Formel Funktionen des Typs aufweist: 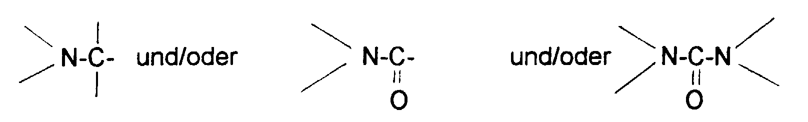 und/oder
〉N-CH₂OH.

7. Materialien nach Anspruch 6, dadurch gekennzeichnet, daß das genannte Agens im freien Zustand ein unter der Einwirkung von Wärme vernetzbares Polyamid-Epichlorhydrin-Harz ist, das funktionelle Azetidinium- und/oder Epoxygruppen aufweist.

8. Materialien nach Anspruch 6, dadurch gekennzeichnet, daß das genannte Agens im freien Zustand eine wäßrige Dispersion von Copolyacrylaten ist, die unter der Einwirkung von Wärme vernetzbar sind und die funktionelle N-Methylolgruppen aufweisen.

9. Materialien nach einem der Ansprüche 6 bis 8, dadurch gekennzeichnet, daß sie mindestens ein Tensid enthalten, das in der Struktur des Polymers zurückgehalten wird.

10. Materialien nach einem der Ansprüche 1 bis 9, dadurch gekennzeichnet, daß sie 0,1 bis 5 Gew.-%, bezogen auf das Gewicht der trockenen Cellulose, des (der) genannten chemischen Agens (Agentien) enthalten.

11. Verwendung mindestens eines chemischen Agens, das in seiner Struktur mindestens ein Stickstoffatom in α-Stellung zu einem Kohlenstoffatom sowie vorteilhaft mindestens ein chemisches Agens enthält, wie es in einem der Ansprüche 3 bis 8 definiert worden ist, um den Materialien auf Basis von Regenerat Cellulose eine verbesserte Beständigkeit gegen Natriumhypochloritlauge (Eau de Javel) zu verleihen.

12. Verfahren zur Herstellung von Materialien auf Basis von Regenerat-Cellulose nach einem der Ansprüche 1 bis 10, das umfaßt:
- die Herstellung einer Cellulose-Lösung,
- die eventuelle Zugabe von löslichen oder unlöslichen Additiven zu der genannten Lösung unter Bildung einer Mischung;
- das Formen der genannten Lösung oder der genannten Mischung;
- das Einführen der genannten Lösung und/oder der genannten Mischung in ein geeignetes Medium und/oder das Erwärmen der genannten Lösung und/oder der genannten Mischung, um die Cellulose zu regenerieren,
dadurch gekennzeichnet, daß es außerdem umfaßt:
- die Einführung einer wirksamen Menge mindestens eines der genannten chemischen Agentien im freien Zustand während der obengenannten Stufen oder am Ende derselben zur Verteilung derselben in dem Endprodukt; und
- erforderlichenfalls die spezifische Behandlung zum Fixieren und/oder Einschließen des genannten Agens im Innern des Cellulose-Netzwerks.

13. Verfahren zur Herstellung nach Anspruch 12, das umfaßt:
- zur Herstellung von zellförmigen Cellulosematerialien:
+ die Herstellung einer pastösen Masse aus einer Celluloselösung wie Viscose, von faserförmigen Materialien, Pigmenten und Porenbildnern;
+ das Formen dieser Masse insbesondere durch Formgießen, das Beschichten beider Seiten oder nur einer Seite mindestens eines Gitters oder einer Ablagerung auf einer Trägerbahn; und
+ das Erwärmen derselben, gegebenenfalls in einem geeigneten Medium, um die genannten Porenbildner darauf einwirken zu lassen und die Cellulose zu regenerieren;
- zur Heirtellung von Fasern, Fäden, Folien, Textilien und Vliesstoffen;
+ die Herstellung einer Celluloselösung durch chemische Umwandlung oder direkte Solubilisierung der Cellulose;
+ die eventuelle Zugabe von Additiven wie Pigmenten zu der genannten Lösung;
+ das Formen derselben durch Extrudieren durch eine Düse; und
+ die Einführung derselben in ein geeignetes Medium, um die Cellulose auszufällen und/oder zu regenerieren.

14. Verfahren nach einem der Ansprüche 12 oder 13, dadurch gekennzeichnet, daß es eine spezifische thermische Behandlung zum Fixieren und/oder Einschließen des genannten Agens im Innern des Cellulose-Netzwerks umfaßt.

15. Verfahren nach einem der Ansprüche 12 bis 14, dadurch gekennzeichnet, daß das genannte Agens nach der Regenerierung der Cellulose eingeführt wird insbesondere durch Besprühen, Beschichten oder Tauchimprägnieren.

## Claims

1. Regenerated cellulose based materials, in particular those selected from cellular cellulose materials, fibers, filaments, sheets, textiles and non-woven materials, characterized in that they contain an effective quantity of at least one chemical agent which improves their resistance to bleach; said chemical agent containing in its structure at least one nitrogen atom a to a carbon atom and being fixed by at least one covalent bond to the cellulose lattice and/or trapped in said lattice; excluding:
. textiles finished with such agents selected from the group consisting in the dimethyloldihydroxyethyleneura (DMDHEU), the dimethyldihydroxyethyleneura (DMeDHEU) and their derivatives; textiles containing such agents of the type copolyacrylate with N-methylol functionnal groups as coating and/or impregnation agents and nonwovens containing such agents of the type copolyacrylate with N-methylol functionnal groups as binders;
. sponges and fibrous articles containing such agents as a biocide in metallic complexes;
. sponges containing such agents of the polyamide type as complexing agents for metallic ions.

2. The materials according to claim 1, consisting of sponges or sponge-cloths.

3. The materials according to one of claims 1 or 2, wherein said agent, in its free state, before incorporation into the cellulose lattice, contains in its structure at least one chemical function which can react with cellulose.

4. The materials according to any one of claims 1 to 3, wherein said agent is a molecule, advantageously fixed by at least one covalent bond which, in the free state, contains in its structure at least one unit of the type:
〉N-CHR-OR'
in which R represents H, OH or a complex radical ; and R' represents H, -CH₃ or -C₂H₅.

5. The materials according to claim 4, wherein said agent, in its free state, is selected from:
. N-(hydroxymethyl)nicotinamide;
. N-(hydroxymethyl)phthalimide ;
. dimethyloldihydroxyethyleneurea (DMDHEU) and its derivatives;
. dimethyldihydroxyethyleneurea (DMeDHEU) and its derivatives.

6. The materials according to any one of claims 1 to 3, wherein said agent is a polymer, fixed and/or trapped in the cellulose lattice which, in the free state, contains in its formula functions of the type: 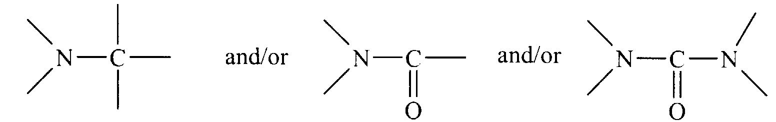 and/or
〉N-CH₂OH .

7. The materials according to claim 6, wherein said agent, in its free state, is a polyamide-epichlorhydrin resin which is cross-linkable on heating and which contains azetidinium and/or epoxy functional groups.

8. The materials according to claim 6, wherein said agent, in its free state, is an aqueous dispersion of copolyacrylates, cross-linkable on heating and which contain N-methylol functional groups.

9. The materials according to any one of claims 6 to 8, containing at least one surfactant which is held within the polymeric structure.

10. The materials according to any one of claims 1 to 9, containing 0. 1 % to 5% by weight of said chemical agent(s), with respect to the weight of dry cellulose.

11. Use of at least one chemical agent containing in its structure at least one nitrogen atom α to a carbon atom and advantageously at least one chemical agent as defined in any one of claims 3 to 8, to improve the resistance of regenerated cellulose based materials to bleach.

12. A process for the preparation of regenerated cellulose based materials according to any one of claims 1 to 10, comprising:
. preparing a cellulose solution,
. optionally, adding soluble or insoluble additives to the solution to produce a mixture;
. shaping the said solution or mixture;
. introducing the said solution and/or mixture into a suitable medium and/or heating to regenerate the cellulose;
characterized in that it further comprises :
. during or after the above steps, introducing an effective quantity of at least one of said chemical agents, in the free state, for distribution in the finished product;
. if necessary, carrying out a specific treatment to fix and/or trap said agent in the cellulose lattice.

13. The preparation process according to claim 12, comprising:
. for the preparation of cellular cellulose materials:
. preparing a paste mass from a cellulose solution, such as viscose, fibrous matter, pigments and porophores;
. shaping the mass, in particular by molding, coating both sides or one side of at least one screen or deposition on a support strip;
. heating, optionally in a suitable medium, to cause the porophores to react and to regenerate the cellulose;
. for the preparation of fibers, filaments, sheets, textiles and non-woven materials:
. preparing a cellulose solution by chemical transformation or direct dissolution of the cellulose;
. optionally, adding additives such as pigments to the solution;
. shaping by extrusion through a die;
. introducing it into a suitable medium to precipitate and/or regenerate the cellulose.

14. The process according to one of claims 12 or 13, comprising a specific heat treatment to fix and/or trap said agent in the cellulose lattice.

15. The process according to any one of claims 12 to 14, wherein said agent is introduced after regeneration of the cellulose, in particular by spraying, coating or bath impregnation.
